# EUROPEAN PATENT APPLICATION

(11) **EP 4 400 293 A1**
(43) Date of publication of application: **17.07.2024**
(21) Application number: 23305044.2
(22) Date of filing: 12.01.2023
(51) Int. Cl.: B29C 70/86, B29C 70/32, F24D 3/10

(54) **METHOD FOR PRODUCING A FIBRE COMPOSITE TANK AND FIBRE COMPOSITE TANK PRODUCED BY THIS METHOD**

(71) Applicant: L'AIR LIQUIDE, SOCIÉTÉ ANONYME POUR L'ÉTUDE ET L'EXPLOITATION DES PROCÉDÉS GEORGES CLAUDE, 75007 Paris (FR); Covess N.V., 3510 Hasselt (BE)
(72) Inventor: PAPIN, Philippe, 78350 JOUY-EN-JOSAS (FR); VANSWIJGENHOVEN, Tony, 3510 HASSELT (BE)
(74) Representative: Cabinet Camus Lebkiri

(57) **Abstract**

The invention relates to a method (100) for producing a fibre composite tank (60) for containing at least a fluid (30) and an equipment (10), the method comprising:
a) a step (110) of assembling complementary portions (21, 22) of a liner (20) around the equipment (10) and/or maintaining support holding said equipment;
b) a step (120) of sealing the complementary portions (21, 22) together, so as to form the liner (20) with the equipment stable inside said liner;
c) a step (130) of introducing the fluid (30) into the liner (20) through openings (24) formed in said liner; and
d) a step (150) of forming a shell layer (50) by winding a composite tape around the liner (20), said composite tape being made of a thermoset or thermoplastic composite material.

The invention relates also to a fibre composite tank (60) for containing at least a fluid (30) and an equipment (10), produced by the method (100) and forming a unitary rigid structure able to withstand an overpressure of at least 2 bars.

## Description

### TECHNICAL FIELD

The invention relates to a method for producing a fibre composite cylindrical tank for containing an equipment and a fluid notably pressurized fluid. It relates also to a fibre composite cylindrical tank as produced by this method

The invention finds applications in the field of gas transport and in particular transport of pressurised gas.

### BACKGROUND ART

Cylindrical fibre composite tanks, or vessels, are known in the art. A known method for making that type of tank, uses filament winding of continuous fibres impregnated with a thermoset resin over an inner bottle (also called "liner") that will remain in the tank after the filament winding step. The inner bottle is sufficiently rigid to be tightly overwrapped with continuous fibres to act as the gas and/or liquid barrier. However, such a method presents the disadvantage that the bottle is heavy and expensive.

Another known method, disclosed in the patent document US 4,760,949, proposes to form a composite container for storage of products at non-atmospheric conditions. The composite container includes a liner member having a metal layer no part of which is exposed to the interior of the composite container in which the liner is used. This method presents the disadvantage that the container is not suitable to withstand high pressure (e.g. 2 bar or more).

Still another known method, disclosed in the patent document WO 2011/143723, proposes a thermoplastic type V tank, able to resist a pressure higher than 2 bar and that has a similar barrier effect as the bottle, but without using any bottle. Such a tank comprises an inner barrier layer comprising a heat-sealable thermoplastic material, an outer shell layer comprising a fibre-reinforced heat-sealable thermoplastic material, an end fitting positioned at the inner side of the inner barrier layer, covered at least partly at its outer concave surface with a heat-sealable thermoplastic material. The inner barrier layer, the outer shell layer and the end fitting form a unitary rigid structure able to withstand an overpressure of at least 2 bar.

For some applications, it is necessary to have an equipment in addition to the fluid (gas or liquid), inside the tank or the container. For example, in an electrolysis application, electrodes or any electrical material have to be placed in the fluid inside the tank. In some aeronautics applications, a membrane has to be placed inside the tank for separating two gas like nitrogen and oxygen. But so far, only container or tank with metallic inner bottle allows such applications.

Thus, there is a need for a fibre composite tank able both to contain an equipment and to withstand an overpressure of 2 bar or more.

### DISCLOSURE OF THE INVENTION

To address the above problems, the applicant proposes a method for building a fibre composite tank around the equipment. The applicant also proposes a fibre composite tank produced by this method.

According to a first aspect, the invention relates to a method for producing a fibre composite tank for containing at least a fluid and an equipment, the method comprising:
- a step of assembling complementary portions of a liner around the equipment and/or maintaining support holding said equipment;
- a step of sealing the complementary portions together so as to form the liner with the equipment stable inside said liner;
- a step of introducing the fluid into the liner through openings formed in said line; and
- a step of forming a shell layer by winding a composite tape around the liner, said composite tape being made of a thermoset or thermoplastic composite material.

This method allows to produce a tank incorporating an equipment and a fluid and resisting to a high pressure.

In the present description of the invention, the term "liner" is used to describe the part on the inner surface of the tank that guarantees the tightness of the tank. Depending on the type of tank, a liner can be made of either a different material than the resin of the reinforcement structure of the tank (e.g. a thermoplastic polymer) or the same resin of the reinforcement structure of the tank.

In addition to the features mentioned in the previous paragraph, the process according to one aspect of the invention may have one or more of the following additional features, considered individually or in any technically possible combination:
- the composite tape comprises continuous fibres impregnated with a first thermoplastic or thermoset resin, said first thermoset or thermoplastic resin being chemically compatible with a second thermoset or thermoplastic resin the liner is made of.
- the liner comprises an inner layer and an outer layer; when continuous fibres of the composite tape are impregnated with a thermoplastic resin, the step (d) of forming a shell layer is carried out under heat conditions so that, during step (d), the outer layer is in a molten state and the inner layer stays in a solid state.
- the fluid inside the liner is a pressurized fluid and the composite tape is applied under pressure conditions during step (d) so that the shell layer is consolidated with the liner.
- the complementary portions of the liner comprise at least two caps, each one of the two caps comprising an opening.
- it comprises, between step (b) and step (c), a step of sealing the opening of each cap with a boss seal. The term "boss seal" is used to describe a specific plug mechanism used to seal a tank opening, whatever the opening diameter is.
- the boss seal is at least partially wound with the composite tape during step (d).
- the boss seal comprises:
   - a first boss section with a diameter larger than an opening diameter, inserted inside the cap during step (a), and
   - a second boss section with a diameter equal to the opening diameter, inserted into the opening and the first boss section after step (c).

According to a second aspect, the invention relates to a fibre composite tank for containing a fluid and an equipment, produced by the method according to the first aspect, forming a unitary rigid structure able to withstand an overpressure of at least 2 bars.

Advantageously, the liner comprises a baseplate overmoulded with a second thermoset or thermoplastic resin.

According to some embodiments, the liner comprises a baseplate overmoulded with a second thermoset or thermoplastic resin.

According to some embodiments, the equipment is at least one among a gas separation membrane, a pair of electrodes, cooling fins, a container.

According to some embodiments, the fluid is at least one gas among hydrogen, oxygen, nitrogen, noble gas.

According to some embodiments, at least two fluids (for example one liquid and one gas) and one solid (for example a catalyst) are contained inside the tank.

### BRIEF DESCRIPTION OF THE DRAWINGS

The invention is further elucidated in the appending figures and detailed description explaining preferred embodiments of the invention. Note that the figures are not drawn to scale. The figures are intended to describe the principles of the invention. In particular:
- Fig. 1 shows a functional diagram of the main steps of the method for producing a fibre composite tank according to the invention;
- Fig. 2A and Fig. 2B show, respectively, sectional views and front views of the fibre composite tank according to an embodiment of the invention, at three different steps of producing of said tank; and
- Fig. 3A and Fig. 3B show, respectively, sectional views and front views of the fibre composite tank according to another embodiment of the invention, at three different steps of producing of said tank.

### DETAILED DESCRIPTION

The present invention will be described with respect to particular embodiments and with reference to certain drawings but the invention is not limited thereto but only by the claims. The drawings described are only schematic and are non-limiting. In the drawings, the dimensions and the relative dimensions do not necessarily correspond to actual dimensions of the invention. Unless stated otherwise, a same element appearing on different figures presents a single reference.

In the description and in the claims, the terms "first", "second", and the like are used for distinguishing between similar elements and not necessarily for describing a sequential or chronological order.

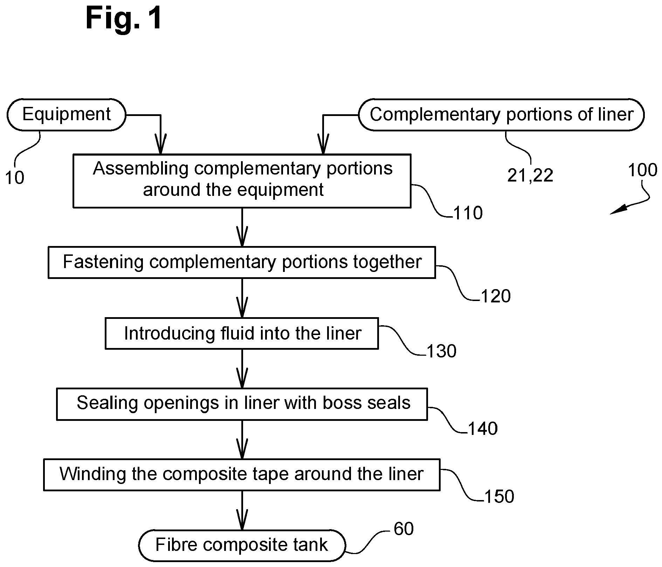

Fig. 1 shows, in the form of a block diagram, the main steps of the method 100 for producing a fibre composite tank according to an embodiment of the invention. This method 100 comprises a first step 110 of assembling complementary portions of liner 21, 22 around the equipment 10. The complementary portions of liner 21, 22 (called more simply "complementary portions") are independent pieces which are adapted to be sealed together in order to form the liner 20.

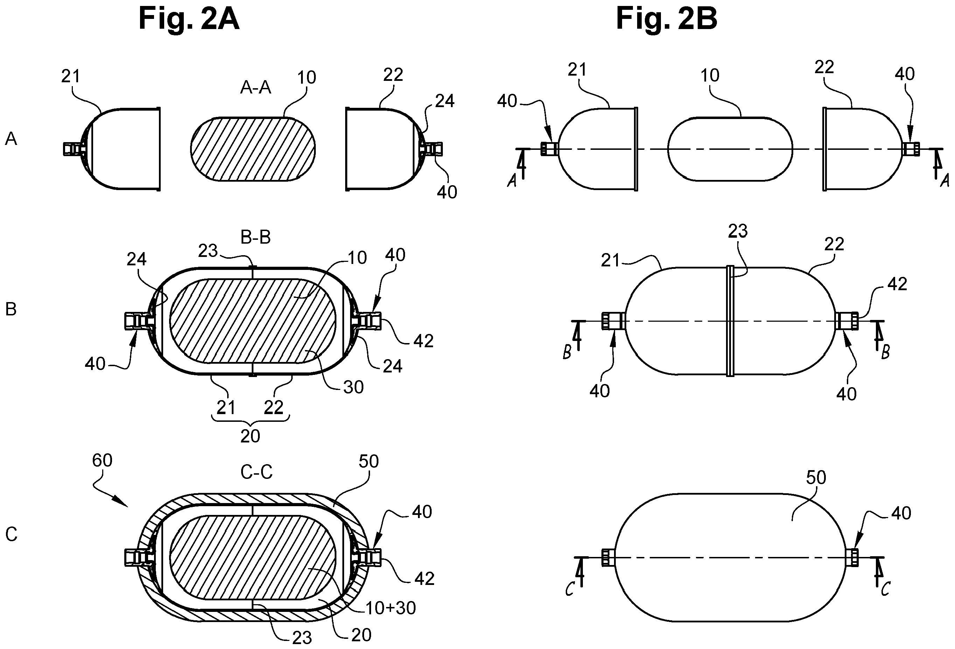

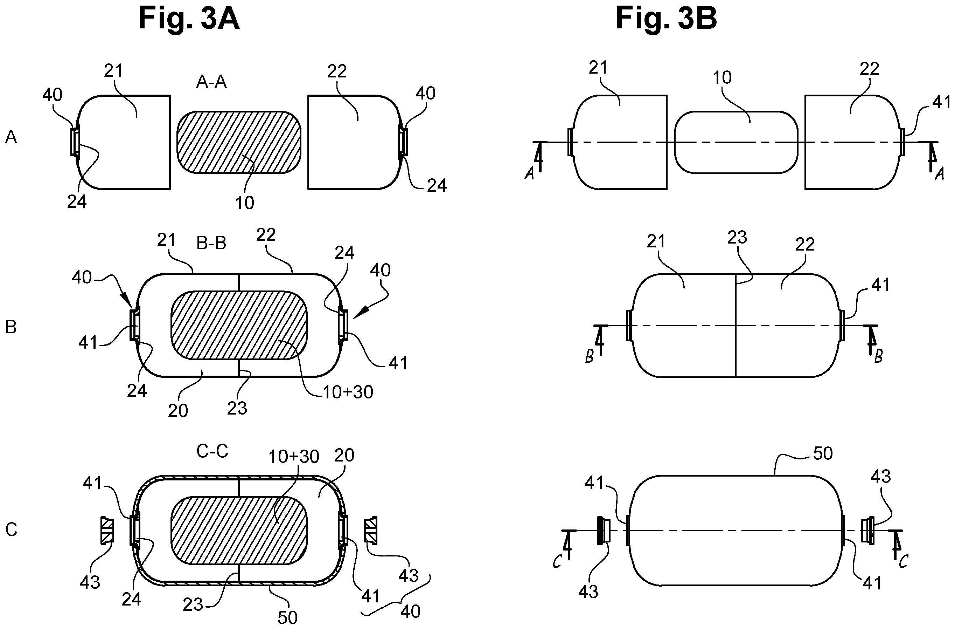

The liner 20 is an impermeable and hermetic pre-formed thermoplastic sheet, that is a pre-form comprising at least a thermoplastic resin coat. The pre-form may be a metallic baseplate coated with a thermoplastic resin or a composite baseplate made of fibres impregnated with a thermoplastic resin. Conventionally, the liner is a hollow structure conceived to receive at least one fluid (gas or liquid or a set of gas, liquid and solid). In the invention, the liner 20 is adapted to receive an equipment 10 in addition to the at least one fluid. In other words, a, equipment 10 is contained in the liner in addition to the gas or the liquid or the set of gas, liquid and solid. Accordingly, the liner 20 is divided in at least two complementary portions 21, 22, conceived to be hermetically sealed together. In the examples of Figs. 2 and 3, the liner 20 comprises only two complementary portions 21, 22, each having for example a form of dome, or hollow half-sphere, placed face to face and sealed together. In some embodiments, in particular when the liner is of long length, the liner 20 comprises more than two complementary portions, for example three or four or more. In these embodiments, two of the complementary portions are caps, for example dome-shaped, forming the ends of the liner and the other complementary portions are one or several hollow cylinders, like tubes, placed between both caps in form of domes. The complementary portions are sealed one with the other, for example by welding.

The equipment 10 is a piece or a set of pieces provided for a specific application. For example, in electrolysis application, the equipment 10 may be some electrodes or other electrical material; in aeronautic applications, the equipment may be one or several membranes separating different gas or liquid. In other applications, the equipment 10 may be one container, some cooling fins, etc. Depending on the application, maintaining support, or spacers, may be used for holding the equipment. For example, in an aeronautic application, maintaining support is used for holding the membrane(s). In case of using maintaining support, said maintaining support is located inside the liner 20, in addition to the equipment and the fluid.

After step 110 of assembling complementary portions around the equipment 10 and/or the maintaining support, the method 100 comprises a step 120 of sealing the complementary portions 21, 22 together. After the sealing step 120, the liner 20 is impermeable and hermetic and contains the equipment 10 in a stable position, the stable position being obtained in some cases through the maintaining support.

After the sealing step 120, the method 100 comprises a step 130 of introducing the fluid 30 into the liner 20 through openings 24 formed in said liner. Indeed, each end complementary portions 21, 22, or cap, comprises an opening 24 allowing introduction of the fluid into the liner 20 containing the equipment 10. Each opening 24 is closed with a boss seal 40. The method 100 comprises then a step 140 of sealing the openings 24 with overmoulded boss seals; this step 140 being executed after the step 130 of introducing the fluid into the liner 20. The fluid 30 inside the liner 20 may be most of the gases, for example hydrogen, oxygen, nitrogen, any noble gas or any corrosive gas as this corrosive gas is compatible with the equipment 10 and/or maintaining support inside the liner 20. The fluid inside the liner 20 may alternatively be a liquid like any alkaline liquid or acid liquid, compatible with the equipment and/or maintaining support. Within a variant, the fluid may be a mix of a gas and a liquid. According to the application, two or more than two distinct fluids may be inside the liner 20, in particular when the equipment is one or several membrane(s). Depending on the applications, the fluids 30 inside the liner 20 may be separated or rather mixed. In some applications, several fluids may be brought in the liner 20 and one mixed fluid may be brought out the liner 20, the equipment 10 being then a device for mixing fluids, for example.

The method 100 comprises further a step 150 of forming a shell layer 50 around the liner 20. This shell layer 50 is obtained by winding a composite tape around the liner 20. The composite tape is a thermoset or thermoplastic composite sheet wrapped all around the liner 20 including at least a part of the boss seals 40. The composite tape comprises longitudinal and continuous fibres (for example fibreglass or carbon fibre, basalt, ...) impregnated with a thermoplastic resin (e.g. polypropylene or polybutene-1, polyamide, ...). The thermoset resin of composite tape, called first thermoset resin, is choose among the thermoset resins chemically compatible with the thermoset resin coat of the liner 20, called second thermoset resin. In some embodiments, the first thermoset resin is identical to the second thermoset resin. Such a compatibility between the first and the second thermoset resins allows a complete adhesion between the liner and the composite tape. Alternatively, the thermoset resin of composite tape may be replaced by a thermoplastic resin, chosen among the thermoplastic resins chemically compatible with the resin coat of the liner 20.

When the composite tape is a thermoplastic composite sheet, the step 150 of winding the composite tape is executed under heat and pressure conditions. When the composite tape is a thermoset composite sheet, the step of winding the composite tape is executed at room temperature (without heating), a specific cure being executed after the winding. The winding of the composite tape may be executed as disclosed in the applicant's patent document WO 2011/143723 A2, herein incorporated by reference. According to the method disclosed in this patent document WO 2100/143723 A2, the composite tape - which comprises a fibrous material, preferably continuous fibres impregnated with a plastic material - is wrapped around the liner for forming a shell layer 50 able to resist to a pressure higher than 2 bar (e.g. 10 or 50 or 200 bar or even more). The composite tape may be a unique continuous strip-shaped of a few centimetres wide (e.g. between 0,25 cm to 20 cm) and a few microns thick (e.g. between 50 and 250 µm). Alternatively, the composite tape may comprise several discontinuous strips wrapped one after the other. During the step 150 of winding the composite tape, an increased tension is exerted upon said composite tape for consolidating the shell layer 50 with le liner 20. Indeed, no external device is there for applying pressure on the composite tape; the only pressure is an internal one, provided by the fluid inside the liner 20. This internal pressure is obtained by pressurizing the fluid inside the liner 20. In other words, the fluid inside the liner 20 is pressurized for applying a pressure on the composite tape and, thus, ensuring its compaction on the liner.

During the step 150 of winding the composite tape, the composite tape material is consolidated with the liner material, that is the materials are united under high temperature by local melting or softening. The heat is chosen so that, during the step 150 of winding the composite tape, the outer layer of the liner 20 is in a molten state adapted to be united with the composite tape, the inner layer of the liner 20 staying in a solid state so that the liner 20 stay hermetic during the winding step 150.

Pressure and heating applied for consolidating the composite tape on the liner depend on the application and/or the materials chose for the composite tape and the liner. It is to be noted also that the materials for the liner and composite tape are chosen as a function of the application and/or the fluid inside the liner.

As shown on Fig.1, as the shell layer 50 is consolidated onto the liner 20, the fibre composite tank 60 according to the invention is provided. Such a fibre composite tank 60 is capable to house hermetically fluid and equipment and to resist to a high pressure up to 50, 100 or 200 bar and even more.

Figs. 2A and 2B represent three different steps of producing of the fibre composite tank according to one embodiment of the invention. Fig. 2A shows sectional views of the fibre composite tank 60; Fig. 2B shows front views of the fibre composite tank 60 at the same steps as Fig.2A. Drawings A of Figs.2A and 2B show two complementary portions 21, 22 before step 110 of assembling. Both complementary portions 21, 22 are caps, placed on both longitudinal sides of the equipment 10. In this embodiment, the equipment 10 is represented as cylindrical; however, equipment 10 may have any shape, round, rectangular, etc.; equipment 10 may also be a set of several pieces positioned and/or assembled together in order to form what is called "equipment". Likewise, in this embodiment, the complementary portions 21, 22 are represented as half-cylindrical; however, complementary portions may have any shape adapted to form a liner 20 when assembled, the liner being of any spherical, square, rectangular, polymorph-shaped, etc., hollow shape.

Each cap 21, 22 comprises an opening 24, preferably located at the closed extremity of the cap, through which the fluid is introduced. Each opening 24 is sealed with a boss seal 40. The boss seals 40 may comprise connection means positioned outside the caps, for connection to the outside world, for example to connect external piping for introducing the fluid 30 inside the liner. When the opening is "small", that means with a diameter between about 4 and 25 mm, like in embodiment of Figs.2A, 2B, each opening 24 may comprise a flange with provisions for O-rings, or an internal screw thread, or a V-clamp, or any other fastening means allowing the secure installation of the boss seal 40. As the opening 24 is small, a current closing device may be used, contrary to the embodiment discloses in relation with Figs. 3A, 3B.

Drawings B of Figs.2A, 2B show the caps 21, 22 after assembling around the equipment 10. Both caps 21, 22 are sealed together, along the common border 23 of the caps, and form the liner 20 with the equipment 10 within. After sealing both caps together, the fluid 30 may be introduced into the liner 20 through the openings 24 and/or the boss seals 40. The equipment 10 is then amid the fluid 30. The fluid 30 and the equipment 10 are contained hermetically inside the liner 20.

Drawings C of Figs.2A, 2B show an embodiment of the fibre composite tank 60 provided accordingly to the method of the invention. This fibre composite tank 60, called more simply tank, comprises:
- a liner 20 housing equipment 10, fluid 30 and/or maintaining support, and
- a shell layer 50 wrapping completely the liner 20 and partially the boss seals 40: the shell layer 50 wraps both caps 21, 22 as well as the sealed border 23.

In embodiments comprising more than two complementary portions of liner, the shell layer 50 wraps all the complementary portions and all the sealed borders between two complementary portions. The shell layer 50 also wraps the openings 24 of the caps 21,22 and the non-protruding parts of the boss seals 40; the protruding part 42 of each boss seal 40 is outside of the shell layer 50, this protruding part 42 being connection means for connection to external piping.

Figs. 3A and 3B represent three different steps of producing of the fibre composite tank according to another embodiment of the invention. Fig. 3A shows sectional views of the fibre composite tank 60; Fig. 3B shows front views of the fibre composite tank 60 at the same steps as Fig.3A. Drawings A of Figs.3A, 3B show two complementary portions 21, 22 before step 110 of assembling. Both complementary portions 21, 22 are caps, placed on both longitudinal sides of the equipment 10. As in the previous embodiment, the equipment 10 is represented as cylindrical; however, equipment 10 may have any shape, round, rectangular, etc.; equipment 10 may also be a set of several pieces positioned and/or assembled together in order to form what is called "equipment". Likewise, in this embodiment, the complementary portions 21, 22 are represented as half-cylindrical; however, complementary portions may have any shape adapted to form a liner 20 when assembled, the liner being of any spherical, square, rectangular, polymorph-shaped, etc., hollow shape.

As the previous embodiment, each cap 21, 22 comprises an opening 24, preferably located at the closed extremity of the cap, through which the fluid is introduced. Each opening 24 is sealed with a boss seal 40. The boss seals 40 may comprise connection means positioned outside the caps, for connection to the outside world, for example to connect external piping for introducing the fluid 30 inside the liner. In the example of Figs.3A, 3B, the opening is "large" (as opposed to "small" opening), that means with a diameter about 100 to 250 mm or even more. When the opening 24 is large, the boss seal 40 may be the same as disclosed in the applicant's patent application EP21305773. For example, the boss seal 40 comprises:
- a first boss section 41 with a first diameter larger than the opening diameter; the first boss section 41 is leaned against the inner surface of the tank by the contained pressurized fluid; as the first boss section 41 has a diameter larger than the opening diameter, the first boss section 41 would not pass through the opening 24 and would remain in place and therefore seal the tank opening 24;
- a second boss section 43 with a second diameter equal to the opening diameter; the second boss section 43 is placed, as an endcap, into the first boss section 41;the second boss section 43 is plugged in the tank's opening 24 and is the outer part of the boss seal 40, that is farthest to the contained fluid;
- a gasket (non-visible on Figs.) placed on the second boss section 43 to prevent any leaks and to ensure tightness; the gasket refers to a piece of soft, rubber, composite, elastomer, plastic, polytetrafluoroethylene, or thermoplastic material, preventing from any fluid leakage; and
- a spring retaining ring (non-visible on Figs.) placed over the second boss section 43 to hold the boss seal 40 at the opening 24 when the tank is empty). It is meant by "spring retaining ring", a multi-turn, spiral wound retaining ring consisting of a flat wire material with rounded edges, coiled on edge to provide a gapless ring with 360 degrees of retention.

With the method 100 of producing a fibre composite tank 60, the composite tape is wound around the liner 20, the first boss section 41, during winding step 150. The second both section 43 may be in connection with an external piping.

Drawings B of Figs.3A, 3B show the caps 21, 22 after assembling around the equipment 10. Both caps 21, 22 are sealed together, along the common border 23 of the caps, and form the liner 20 with the equipment 10 within. After sealing both caps together, the fluid 30 may be introduced into the liner 20 through the openings 24 and/or the boss seals 40. The equipment 10 is then amid the fluid 30. The fluid 30 and the equipment 10 are contained hermetically inside the liner 20.

Drawings C of Figs.3A, 3B show an embodiment of the fibre composite tank 60 provided accordingly to the method of the invention. This fibre composite tank 60, comprises a liner 20 housing equipment 10, fluid 30 and/or maintaining support, and a shell layer 50 wrapping completely the liner 20 and the boss seals 40 at each end of said liner.

Whatever the embodiment, the fibre composite tank 60 provided by the method and described above is able to resist to a pressurized fluid up to about 200 bar.

While the invention has been described in conjunction with specific embodiments thereof, it is important to note that combinations of embodiments is feasible and may be considered.

## Claims

1. Method (100) for producing a fibre composite tank (60) for containing at least a fluid (30) and an equipment (10), the method comprising:
a) a step (110) of assembling complementary portions (21, 22) of a liner (20) around the equipment (10) and/or maintaining support holding said equipment;
b) a step (120) of sealing the complementary portions (21, 22) together, so as to form the liner (20) with the equipment stable inside said liner;
c) a step (130) of introducing the fluid (30) into the liner (20) through openings (24) formed in said liner; and
d) a step (150) of forming a shell layer (50) by winding a composite tape around the liner (20), said composite tape being made of a thermoset or thermoplastic composite material.

2. Method according to claim 1, **characterized in that** the composite tape comprises continuous fibres impregnated with a first thermoset or thermoplastic resin, said first thermoset or thermoplastic resin being chemically compatible with a second thermoset or thermoplastic resin the liner is made of.

3. Method according to any one of claims 1 to 2, **characterized in that** the liner (20) comprises an inner layer and an outer layer, step (d) of forming a shell layer (50) being carried out under heat conditions so that, during step (d), the outer layer is in a molten state and the inner layer stays in a solid state.

4. Method according to any one of claims 1 to 3, **characterized in that** the fluid (30) inside the liner (20) is a pressurized fluid and the composite tape is applied under pressure conditions during step (d) so that the shell layer (50) is consolidated with the liner (20).

5. Method according to any one of claims 1 to 4, **characterized in that** the complementary portions (21, 22) of the liner comprise at least two caps, each one of the two caps comprising an opening (24).

6. Method according to claim 5, **characterized in that** it comprises, between step (b) and step (c), a step of sealing the opening (24) of each cap with a boss seal (40).

7. Method according to claim 6, **characterized in that** the boss seal (40) is at least partially wound with the composite tape during step (d).

8. Method according to any one of claims 6 to 7, **characterized in that** the boss seal (40) comprises:
- a first boss section (41) with a diameter larger than an opening diameter, inserted inside the cap (21, 22) during step (a), and
- a second boss section (43) with a diameter equal to the opening diameter, inserted into the opening (24) and the first boss section (41) after step (c).

9. A fibre composite tank (60) for containing at least a fluid (30) and an equipment (10), produced by the method (100) according to any one of the preceding claims, forming a unitary rigid structure able to withstand an overpressure of at least 2 bars.

10. A fibre composite tank according to claim 9, **characterized in that** the liner (20) comprises a baseplate overmoulded with a second thermoset thermoplastic resin.

11. A fibre composite tank according to claim 9 or 10, **characterized in that** the equipment (10) is at least one among a gas separation membrane, a pair of electrodes, cooling fins, a container.

12. A fibre composite tank according to any one of claim 9 to 11, **characterized in that** the fluid (30) is at least one gas among hydrogen, oxygen, nitrogen and/or noble gas.

13. A fibre composite tank according to any one of claim 9 to 12, **characterized in that** it contains at least one liquid, one gas and one solid, such as a catalyst.
